Europäisches Patentamt

European Patent Office

Office européen des brevets

(11) Publication number: **0 325 898**
**A1**

## EUROPEAN PATENT APPLICATION

(21) Application number: **88830450.8**

(22) Date of filing: **26.10.88**

(51) Int. Cl.⁴: **F16L 55/10 , B65D 59/02**

(30) Priority: **23.12.87 IT 2320987**

(43) Date of publication of application:
**02.08.89 Bulletin 89/31**

(84) Designated Contracting States:
**AT BE CH DE ES FR GB GR LI NL SE**

(71) Applicant: **Montanari, Antonio**
**Via San Bernardo, 10**
**I-20090 Opera Milano(IT)**

(72) Inventor: **Montanari, Antonio**
**Via San Bernardo, 10**
**I-20090 Opera Milano(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **A temporary plug for hydraulic and fluid ducts.**

(57) The present invention relates to a temporary plug for hydraulic and fluid ducts, which comprises a head (1) rigid, at the bottom thereof, with a hollow body (2), having a thread on its outer surface and longitudinal notches (3) or cut-outs, which allow for the hollow body (2) to be snap engaged with threaded seats formed at operating interruptions of hydraulic ducts or pipes included in a hydraulic, fluid or pneumatic circuit. The engaged plug may be either safely threaded in order to shut off the fluid in the ducts, or it may be successively withdrawn to complete the assembling of the duct or hydraulic circuit.

Fig.1

EP 0 325 898 A1

# A TEMPORARY PLUG FOR HYDRAULIC AND FLUID DUCTS

## BACKGROUND OF THE INVENTION

The present invention relates to a temporary plug for hydraulic and fluid ducts.

As is known, in making buildings and, more specifically, house or office buildings, it is necessary to specifically design in sequence the working steps which, in particular, comprise mason works, pipe fitter works and mason works again.

Thus, as sanitary apparatus and fixed kitchen components are to be assembled, the several supplying pipes must ne accurately cleaned at the branching zones.

A like problem occurs as oil-dinamic system parts or the like are to be replaced, which requires the disassembling of several component parts in a dusty working environment.

For solving the above mentioned problems closure means have been previously used made by the operator by using component and materials available at the working place.

## SUMMARY OF THE INVENTION

Thus, the task of the present invention is to solve the above mentioned problems, by providing plug members which have been specifically designed for temporary plugging or closing ducts and pipes in buildings and industrial apparatus.

Within the scope of the above mentioned task, a main object of the present invention is to provide simple and quickly applied un-expensive means which can be easily re-used and are able of efficiently temporary closing hydraulic ducts and the like.

According to one aspect of the present invention, the above mentioned task and objects, as well as yet other objects, which will become more apparent hereinafter, are achieved by a plug member for hydraulic and fluid ducts, characterized in that it comprises a head rigid, at the bottom thereof, with a hollow body having a thread on its outer surface and longitudinal notches or cut-outs which allow for said hollow body to be snap engaged with threaded seats as formed at operating interruptions of water or the like ducts included in a hydraulic, fluid or pneumatic circuit.

## BRIEF DESCRIPTION OF THE DRAWINGS

Further characteristics and advantages of the invention will become more apparent hereinafter from the following detailed description of a preferred, though not exclusive embodiment, of the temporary plug according to the invention, which is illustrated, by way of an indicative but not limitative example, in the accompaning drawing, where:

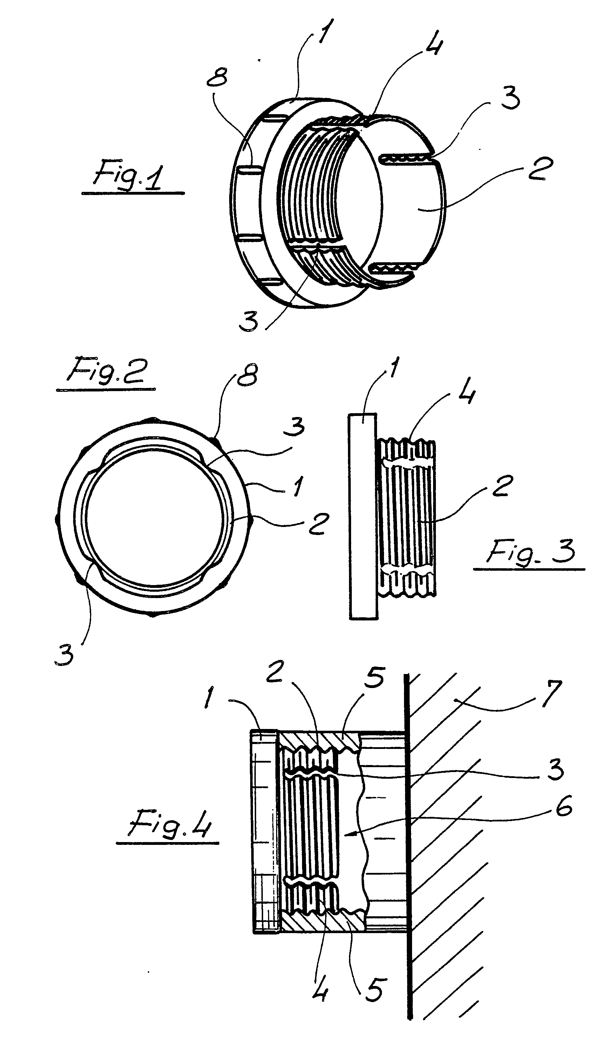

Figure 1 is a perspective view of the plug member according to the invention;

Figure 2 is a top view of the subject plug member;

Figure 3 is a side view of the subject plug member;

and

Figure 4 is a side view, partially cross-sectioned, of the plug member mounted on a hydraulic duct length which partially projects from a wall.

## DESCRIPTION OF THE PREFERRED EMBODIMENT

With reference to the Figures of the accompanying drawing, the plug member according to the invention comprises a head portion 1, of cylindrical shape, therewith there is rigid, at the bottom, a hollow body 2 provided with longitudinal notches or cut-outs 3.

As shown, the hollow body 2 is provided with an outer thread, according to the profile 4, and the length of said hollow body 2 will depend on the length of the duct portion 5, having an inside thread, thereinto said hollow body 2 must be introduced, and which is arranged at an operating interruption or gap.

Thus, owing to the provision of the mention ed longitudinal notches 3, said hollow body or plug member 2 can be snap engaged with the portion 5 and, moreover, owing to the resiliency of the material forminf said plug member 2, preferably consisting of a plastics material, it may snugly engage with the seat 6, in which it can be successively completely threaded.

As, after having assembled sanitary items or the like, these items must be coupled to ducts 5 arranged in a wall 7, it will be sufficient to unthread the plug member 2 and carry out the desired coupling operations.

As it should be apparent, the plug member according to the invention, can be re-used for other fluid shut-off operations, obviously relating to ducts or pipes having corresponding diameters and like threads.

Likewise, the plug member 2 can be used in shut-off portions of ducts included in hydraulic or pneumatic circuits of operating machines and systems.

In order to facilitate its handling and assembling-disassembling operations, the head portion 1 is provided, on its peripheral cylindrical surface, with suitable ridges 8.

From the above disclosure it should be apparent that the plug member according to the invention fully achieves the intended task and objects.

While the invention has been disclosed and illustrated with reference to a preferred embodiment thereof, it should be apparent that the disclosed embodiment is susceptible to several modifications and variations, all of which will come within the scope and spirit of the appended claims.

## Claims

1. A temporary plug-member for hydraulic and fluid ducts, characterised in that it comprises a head portion rigid, at the bottom thereof, with a hollow body having an outer thread and longitudinal notches or cut-outs adapted to allow for said hollow body to be snap engaged in corresponding threaded seats formed at operating interruptions or gaps of hydraulic ducts included in a hydraulic, fluidic or pneumatic circuit.

2. A temporary plug-member for hydraulic ducts and the like, according to the preceding Claim, characterized in that, after assembling, said plug member can be either safely threaded so as to completely shut-off the fluid in said duct, or withdrawn for completing the installation of said duct.

3. A temporary plug-member for hydraulic and fluid ducts, according to one or more of the preceding Claims, characterized in that said plug comprises, on the peripheral cylindrical surface of said head portion, lugs or ridges adapted to facilitate the gripping of said head portion and the handling thereof.

4. A temporary plug-member for hydraulic and fluid ducts, according to one or more of the pre ceding Claims, characterized in that said threaded hollow body is provided with notches made by a milling operation or other equivalent means.

5. A temporary plug-member for hydraulic and fluid ducts, according to the precedending Claims, and substantially as disclosed and illustrated for the intended objects.

EP 0 325 898 A1

Fig.1

Fig.2

Fig.3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 432 449 (COULTER ELECTRONICS, INC.) <br> * Figures 7-9 * <br> --- | 1 | F 16 L 55/10 <br> B 65 D 59/02 |
| A | GB-A- 232 941 (COLONA MANUFACTURING CO.) <br> * Figure 2 * <br> --- | 1 | |
| A | FR-A-2 427 268 (H. HAMON) <br> * Figure 3 * <br> ----- | 1 | |

| | TECHNICAL FIELDS SEARCHED (Int. Cl.4) |
|---|---|
| | F 16 L <br> B 65 D |

The present search report has been drawn up for all claims

| Place of search | Date of completion of the search | Examiner |
|---|---|---|
| THE HAGUE | 04-04-1989 | BARTSCH A.W. |